# EUROPÄISCHE PATENTSCHRIFT

(11) **EP 1 654 065 B1**
(45) Veröffentlichungstag und Bekanntmachung des Hinweises auf die Patenterteilung: **07.06.2017**
(21) Anmeldenummer: 04763757.4
(22) Anmeldetag: 04.08.2004
(51) Int. Cl.: B01L 3/00

(54) **FLUSSZELLE AUS SCHICHTEN MIT VERBINDUNGSMITTEL**
FLOW CELL CONSISTING OF LAYERS AND CONNECTION MEANS
CUVE A CIRCULATION CONSTITUEE DE COUCHES ET DE SYSTEMES DE LIAISON

(30) Priorität: 11.08.2003 DE 10336849
(43) Veröffentlichungstag der Anmeldung: 10.05.2006
(73) Patentinhaber: THINXXS MICROTECHNOLOGY AG, 66482 Zweibrücken (DE)
(72) Erfinder: WEBER, Lutz, 66482 Zweibrücken (DE)
(74) Vertreter: Bernhardt, Reinhold
(86) Internationale Anmeldenummer: PCT/EP2004/008700
(87) Internationale Veröffentlichungsnummer: WO 2005/016529

(56) Entgegenhaltungen:
- WO-A-91/09970
- WO-A-95/22051
- WO-A-03/004159
- DE-A- 19 948 087
- US-A- 4 039 247

## Beschreibung

Die Erfindung betrifft eine Flusszelle mit einer Schichtung aus drei Platten, in der eine Zwischenplatte aus einem nachgiebigen Material zwischen Platten aus einem festeren Material eingespannt ist und mindestens eine der Platten wenigstens eine zur Aufnahme von Fluid vorgesehene Ausnehmung aufweist, die durch eine andere Platte der Schichtung begrenzt ist, wobei die Platten durch in Richtung parallel zur Plattenebene im Abstand zu der Ausnehmung angeordnete Mittel unter Pressung der Zwischenplatte miteinander verbunden sind.

Miniaturisierte Flusszellen solcher Art kommen zunehmend in der Analytik und Sensorik auf dem Gebiet der Chemie, insbesondere Biochemie, und der Medizin, insbesondere der Diagnostik, zur Anwendung. Durch die obengenannte Ausnehmung kann z.B. ein Mikrokanal, eine mit diesem in Fluidverbindung stehende Reaktionskammer und/oder eine Kammer für die Aufnahme eines Sensors gebildet sein, wobei sich die Abmessungen solcher Ausnehmungen in wenigstens einer Raumrichtung zwischen wenigen 10 µm und 100 µm bewegen. Je nach Aufbau und Ausstattung können solche Flusszellen in Labors durchgeführte Untersuchungen als Labor "on chip" ganz oder teilweise übernehmen.

Insbesondere im Hinblick auf den Einsatz in der Medizin kommt es darauf an, solche Mikrostrukturen aufweisenden Flusszellen möglichst kostengünstig in Massenfertigung herzustellen. Teuere glas- oder siliziumartige Substrate, die eine präzise Mikrostrukturierung durch Halbleitertechniken ermöglichen, müssen Teilen der Flusszelle vorbehalten bleiben, für welche Kunststoffe wegen ihrer Materialeigenschaften nicht in Betracht kommen.

Der oben beschriebenen Flusszelle ähnliche Systeme gehen aus der US 4,798,706, der DE 199 48 087 A1, der WO 99/19717, der US 5,500,270, der US 5,571,410, der US 5,658,413, der US 5,738,825 und der WO 99/46045 hervor.

Aus der DE 199 48 087 A1 ist eine Flusszelle bekannt, die eine flexible Zwischenschicht mit vorgegebenen Strukturen zur Bildung von Probenkammern aufweist. Diese Schicht ist aus ist aus einer viskoelastischen Polymerzusammensetzung gebildet, die in Bezug auf Glas, Kunststoff, Metall- oder Halbleitersubstraten eine inhärente Haftfähigkeit besitzt. Zur Bildung der Zelle ist die Schicht haftend mit einem Bodenteil und einer Abdeckung verbunden.

Aus der US 5,376,252 geht eine Flusszelle hervor, die eine aus einem elastischen Material bestehende Zwischenplatte mit Kanalstrukturen aufweist. Im Betrieb der Flusszelle werden die drei Komponenten durch eine externe Klemmvorrichtung zusammengepresst, so dass flüssigkeitsdichte Mikrokanäle entstehen. Nach Entnahme der Flusszelle aus der externen Klemmvorrichtung ist die Verbindung zwischen den Platten aufgehoben, und es besteht die Gefahr chemischer und biologischer Kontaminierung der Umgebung. Vor dem Einlegen der Platten in die Klemmvorrichtung sind umfangreiche Maßnahmen erforderlich, um die funktionell zusammenwirkenden Mikrostrukturen auf den Platten zueinander auszurichten.

Eine Flusszelle der eingangs erwähnten Art ist aus der WO 03/004 159 A bekannt. Beschrieben ist eine mikrofluide Sandwichstruktur, bei der die Platten unter Pressung der Zwischenplatte durch Schrauben zusammengehalten sind.
Aus der US 4,039,247 geht eine Vorrichtung zur Bildung einer Vielzahl von Zellschichten auf je einem Mikroskopierobjektglas hervor. Eine Grundplatte nimmt in einer Einsenkung eine Anzahl von Objektgläsern auf. Über den Objektgläsern werden eine weiche Platte und eine festere Platte angeordnet und mit der Grundplatte unter Zusammenpressen der weichen Platte verschraubt. So entsteht auf den Objektgläsern eine Vielzahl von Vertiefungen, deren Bodenrand durch das Anpressen der weichen Zwischenplatte abgedichtet ist. Die Bildung von Zellschichten kann durch Inspektionslöcher auf der den Zellschichten abgewandten Seite in einem Mikroskop beobachtet werden. Nach abgeschlossener Zellschichtbildung wird die Vorrichtung demontiert, sodass die Zellschichten unabhängig von der Vorrichtung untersucht werden können.

Der vorliegenden Erfindung liegt die Aufgabe zugrunde, eine neue Flusszelle der eingangs erwähnten Art zu schaffen, die sich mit geringerem Aufwand als bekannte derartige Flusszellen fertigungssicher herstellen und betreiben lässt und in die separat vorgefertigte Baugruppen, wie Mikropumpen, -ventile, Fluidspeicher und dergleichen, integrierbar sind.

Die diese Aufgabe lösende Flusszelle nach der Erfindung ist dadurch gekennzeichnet, dass wenigstens eine der Platten aus dem festeren Material wenigstens eine Ausnehmung zur Aufnahme eines separat vorgefertigten Mikrobauteils aufweist, wobei das Mikrobauteil in der Ausnehmung formschlüssig gehalten und die Ausnehmung sowohl zur Zwischenplatte als auch zur Außenseite der Flusszelle hin offen und von außen gesehen hinterschnitten oder nur zur Zwischenplatte hin offen ist, und dass als Ausnehmung zur Aufnahme von Fluid ein parallel zur Plattenebene verlaufender Mikrokanal vorgesehen ist, der mit dem Mikrobauteil oder einer durch das Mikrobauteil begrenzten Reaktionskammer in Fluidverbindung steht.

Vorteilhaft lassen sich gemäß der Erfindung durch die Ausnehmung gebildete Mikrokanäle, Reaktionskammern und dergleichen dauerhaft, durch die gepresste Zwischenplatte, auch nach Entsorgung der Flusszelle, abdichten. Vorteilhaft ist das Mikrobauteil in der Ausnehmung positionsgenau durch Formschluss ohne Klebe- oder Schweißverbindungen gehalten. In der Ausnehmung kann z.B. eine Pumpe, ein Ventil, ein Sensor, und ggf. oberflächenfunktionalisierte Sichtfenster, ein Filter, ein Fluidspeicher oder eine Elektrode angeordnet sein. Gegebenenfalls besteht das Mikrobauteil aus Silizium oder Glas.

In einer bevorzugten Ausführungsform der Erfindung sind in der Schichtung seitlich, d.h., in Richtungen parallel zur Plattenebene, im Abstand zu der Ausnehmung Positionierelemente zur gegenseitigen Ausrichtung der Platten der Flusszelle angeordnet. Diese Positionierelemente bewirken, dass in den Platten gebildete Strukturen bei der Montage der Flusszelle selbsttätig zueinander ausgerichtet werden und in der montierten Flusszelle ausgerichtet bleiben.

In einer besonders bevorzugten Ausführungsform der Erfindung weisen die Positionierelemente und die Verbindungsmittel gemeinsame Bestandteile auf.

Zweckmäßig handelt es sich bei den Verbindungsmitteln und/oder Positionierelementen um Löcher und Stifte. Eine der drei Platten kann mit senkrecht vorstehenden Stiften versehen sein, welche in Löcher in den anderen Platten eingeführt sind. Die Stifte können thermisch verformbar sein, so dass in der Art einer Vernietung an den freien Enden durch geeignete Press- und Heizstempel die betreffende Platte hintergreifende Köpfe hergestellt werden können. Der Stiftdurchmesser ist etwas geringer als der Lochdurchmesser. Diese Differenz bestimmt die Positioniergenauigkeit der Platten zueinander. Andererseits ist bei einer Vielzahl von Stiften und Löchern durch diese Differenz gesichert, dass sich trotz Positionstoleranzen der Stifte und Löcher die gelochten Platten auf die mit den Stiften versehene Platte aufstecken lassen.

Zweckmäßig sind an einander gegenüberliegenden Rändern der Platten, ggf. rahmenartig, Verbindungsmittel oder/und Positionierelemente angeordnet. Darüber hinaus können auch im Innern der Platten, im lateralen Abstand zu Ausnehmungen, Verbindungsmittel und Positionierelemente angeordnet sein. Es wäre ferner eine rahmenartige Klebe- oder Schweißverbindung denkbar.

Die Pressung der Zwischenplatte ließe sich dadurch verstärken, dass die äußeren, die Zwischenplatte einschließenden Platten vorgebogen sind und bei der Montage der Flusszelle begradigt werden.

In weiterer Ausgestaltung der Erfindung weist wenigstens eine der Platten aus festerem Material Löcher mit einer Einsenkung für die Aufnahme der Köpfe zur Verbindung der Platten verwendeter Stifte auf. Von einer Bodenplatte stehen somit keine Teile vor, und die Flusszelle lässt sich stabil auf einer ebenen Unterlage abstellen.

Vorteilhaft sind die lateralen Abmessungen eines in der Ausnehmung angeordneten Mikrobauteils größer als die lateralen Abmessungen einer durch das Mikrobauteil begrenzten Ausnehmung, z.B. einer Reaktionskammer, in der Zwischenplatte. In diesem Fall ist vorteilhaft ein zwischen dem Mikrobauteil und der Seitenwand der Ausnehmung gebildeter Schlitz durch die weiche Zwischenplatte abgedichtet.

In einer Plattenschichtung können mehrere, jeweils für sich funktionsfähige Flusszellen-Funktionseinheiten untergebracht sein. Ggf. sind zwischen den Funktionseinheiten weitere Verbindungsmittel oder/und Positionierelemente angeordnet, um auf der Zwischenplatte eine möglichst gleichmäßige Flächenpressung zu erreichen.

In weiterer Ausgestaltung der Erfindung ist an wenigstens einer der Platten aus festerem Material ein Anschlussstück einstückig angeformt, das z.B. eine konische Außen- oder/und Innenfläche aufweisen kann. Die konische Außenfläche erleichtert das Anbringen von Schläuchen mit unterschiedlichem Durchmesser. An ein Anschlussstück mit einer konischen Innenfläche lässt sich ein Verbindungsschlauch mit einem konischen Endstück anschließen.

In weiterer vorteilhafter Ausgestaltung der Erfindung ist die Zwischenplatte nur in einem an die Ausnehmung und ggf. die Verbindungsmittel angrenzenden Bereich gepresst. Dies wird durch flache Vertiefungen in der Zwischenplatte oder der anliegenden Platte erreicht, die im Abstand zu der Ausnehmung angeordnet sind. Durch diese Maßnahme erhöht sich die Flächenpressung. So kann die zur Sicherung der Dichtheit aufzubringende Presskraft insgesamt verringert werden, wodurch sich die Montage vereinfacht. Die Verringerung der Presskraft dient auch der Dauerhaltbarkeit der Flusszelle, indem die Verbindungsmittel weniger belastet sind.

An der Flusszelle können auch außen durch eine Folie abgedeckte Ausnehmungen für die Aufnahme von Fluid gebildet sein, wie z.B. Reaktionskammern und

Mikrokanäle, wobei z.B. diese Strukturen das im Innern der Zelle gebildete Fluidnetzwerk ergänzen.

In weiterer Ausgestaltung der Erfindung ist in wenigstens einer der Platten eine Ausnehmung mit einem gegenüber der Plattendicke geschwächten, verformbaren oder/und mit einer Kanüle durchstoßbaren Bodenbereich gebildet. Durch Einwirkung auf den Bodenbereich von außen können z.B. integrierte Dispensereinrichtungen betätigt werden. Über Kanülen sind Flüssigkeitseingaben und -entnahmen von außen möglich.

Integrierte Pumpen und Ventile können z.B. durch Piezoaktoren angetrieben sein, wozu in die Flusszelle gemäß einer Ausführungsform der Erfindung elektrische Anschlussleiter integriert sind.

In der bevorzugten, aus insgesamt drei Platten bestehenden Ausführungsform bestehen die Deckplatte und die Bodenplatte aus einem vergleichsweise steifen Kunststoff mit einem Elastizitätsmodul zwischen 1000 N/mm² und 10000 N/mm². Die Plattendicke liegt vorzugsweise zwischen 0,1 mm und 5 mm. Als Materialien kommen vor allem thermoplastische Kunststoffe wie PMMA, COC, PC, PS, LCP, PEEK und PP in Betracht.

Die Zwischenplatte besteht bei einer Dicke von 0,5 mm bis 3 mm aus einem vergleichsweise weichen Kunststoff mit einem Elastizitätsmodul zwischen 1 N/mm² und 10 N/mm². Die Platte ist vorzugsweise durch Mikrospritzgießen aus thermoplastischen Elastomeren, wie Polyurethan und Silikon, hergestellt. Bei der Montage lässt sich eine solche Platte auf 50 bis 95% ihrer ursprünglichen Dicke zusammenpressen.

Insbesondere für die Bodenplatte kommen alternativ auch andere Materialien, wie z.B. Keramik oder Leiterplattenmaterial, in Betracht. Letzteres eignet sich besonders zur Aufnahme von elektrischen Leitern.

Die Erfindung soll nun anhand von Ausführungsbeispielen und der beiliegenden, sich auf diese Ausführungsbeispiele beziehenden Zeichnungen näher erläutert werden. Es zeigen:
- Fig. 1: eine Flusszelle nach der Erfindung in einer perspektivischen Ansicht,
- Fig. 2: die Flusszelle von Fig. 1 in einer perspektivischen Explosionsdarstellung schräg von oben,
- Fig. 3: die Flusszelle von Fig. 1 in einer perspektivischen Explosionsdarstellung schräg von unten,
- Fig. 4: verschiedene Ausführungen und Anordnungen von Mikrokanälen in einer Flusszelle nach der Erfindung,
- Fig. 5: verschiedene Ausführungsformen von Anschlüssen an einer Flusszelle nach der Erfindung,
- Fig. 6: verschiedene Arten von Verbindungen zwischen den Platten einer Flusszelle nach der Erfindung,
- Fig. 7: verschiedene Ausführungsformen in die Flusszelle nach der Erfindung eingebauter Mikrobauteile,
- Fig. 8: verschiedene Ausführungsformen von Mikropumpen in einer Flusszelle nach der Erfindung,
- Fig. 9: verschiedene Ausführungsformen von Ventilen in einer Flusszelle nach der Erfindung,
- Fig. 10: verschiedene Ausführungsformen von Dispensern in einer Flusszelle nach der Erfindung, und
- Fig. 11: verschiedene Ausführungsformen für in eine Flusszelle nach der Erfindung integrierte elektrische Leiter.

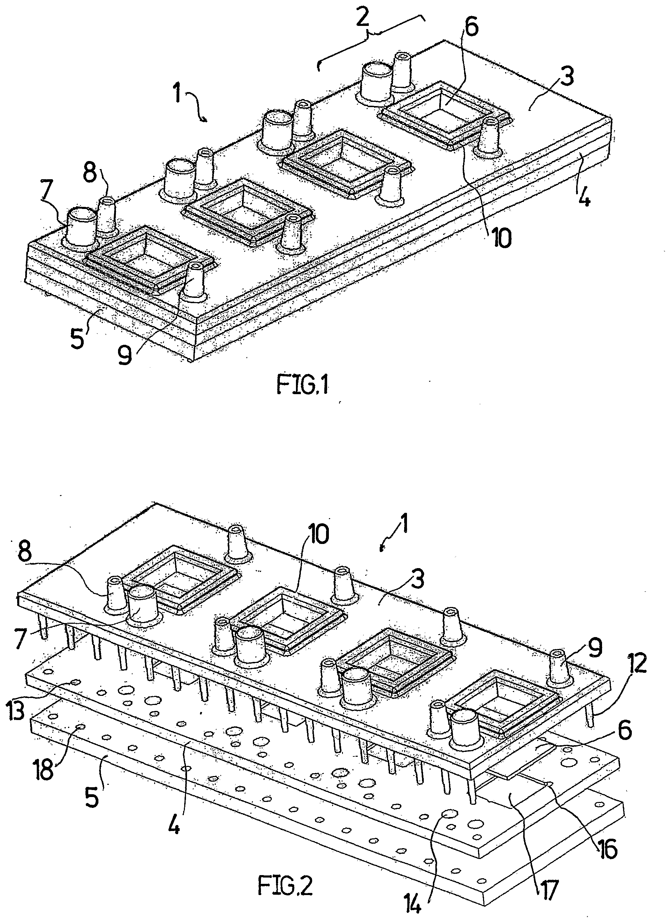

Eine in den Fig. 1 bis 3 gezeigte Flusszelle 1 weist eine Deckplatte 3, eine Zwischenplatte 4 und eine Bodenplatte 5 auf. In dem gezeigten Ausführungsbeispiel umfasst die Flusszelle vier übereinstimmende Funktionseinheiten 2. Die Platten 3 bis 5 sind durch Replikationsverfahren, vorzugsweise Mikrospritzgießen, hergestellt. Die Außenabmessungen der Platten liegen zwischen 5 und 200 mm, die Dicken zwischen 0,5 und 10 mm.

Jede Funktionseinheit 2 enthält einstückig mit der Deckplatte 3 an deren Oberseite verbundene Anschlüsse, einen Anschluss in Form eines Reservoirs bzw. Wells 7 und Schlauchanschlüsse 8 und 9. Weiterhin umfasst jede Funktionseinheit 2 ein weiter unten erläutertes Mikrobauteil 6, das von unten in eine in der Deckplatte 3 gebildete, durchgehende Tasche 10 einlegbar ist.

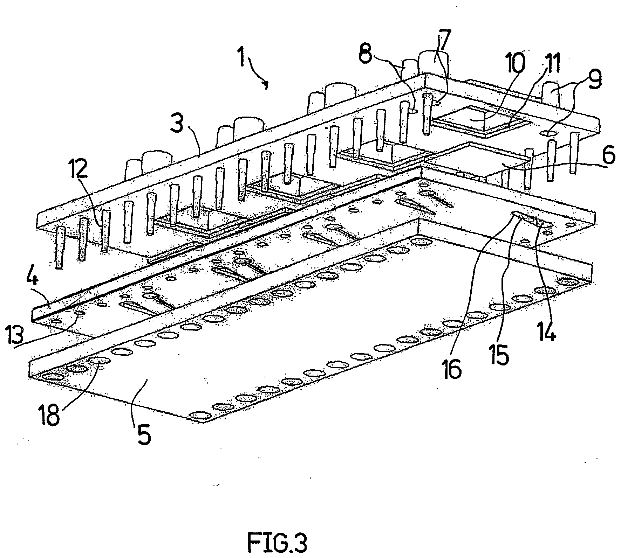

Wie Fig. 3 erkennen lässt, weist die rechteckige Tasche 10 eine Schulter 11 auf, die einen Sitz für das Mikrobauteil 6 bildet. Die seitlichen Abmessungen der Tasche 10 im Bereich der Schulter sind gegenüber den entsprechenden Abmessungen des einzusetzenden Mikrobauteils um 0,01 bis 0,1 mm größer gewählt. Die Tiefe der Schulter ist gegenüber der Dicke des Mikrobauteils 6 um vorzugsweise 0,01 bis 0,1 mm geringer, so dass das Mikrobauteil 6 im eingebauten Zustand von der Unterseite der Deckplatte 3 vorsteht.

An die Deckplatte 3 sind ferner Positionierstifte 12 angeformt, deren Länge größer als die Summe der Plattendicken von Zwischen- und Bodenplatte ist. Wie aus Fig. 2 und 3 hervorgeht, ist an den beiden Längsseiten der Deckplatte 3 jeweils eine lineare Reihe solcher Stifte gebildet. Die Anordnung der Positionierstifte ermöglicht eine gleichmäßige Flächenpressung im zusammengesetzten Zustand der Platten. Vorzugsweise ist der Abstand zwischen den Positionierstiften kleiner als 10 mm.

Während die im Spritzgießverfahren hergestellten Platten 3 und 5 aus einem festen Kunststoff, wie z.B. PMMA, bestehen, handelt es sich bei dem Material der Zwischenplatte 4 um einen weichen, ggf. elastischen Kunststoff, z.B. Silikon.

Die Zwischenplatte 4 weist entsprechend den Positionierstiften 12 angeordnete Positionierlöcher 13 auf, deren Innendurchmesser vorzugsweise um 0,01 mm bis 0,2 mm größer als der Durchmesser der Positionierstifte 12 ist.

In der Zwischenplatte sind ferner Durchgangslöcher 14 gebildet, deren Positionen mit dem Well 7 sowie den Schlauchanschlüssen 8 und 9 korrespondieren. Mikrokanäle 15 auf der Unterseite der Zwischenplatte 4 weisen entsprechend den Anforderungen an die Flusszelle bemessene Querschnittsabmessungen auf. Typischerweise liegen die Querschnittsflächen zwischen 0,01 x 0,01 mm² und 1 x 1 mm². Die Mikrokanäle 15 sind über Verbindungslöcher 16 mit einer auf der Oberseite der Zwischenplatte 4 gebildeten Reaktionskammer 17 verbunden, die als rechteckige Vertiefung ausgebildet und an ihrer Oberseite durch die Unterseite des Mikrobauteils 6 begrenzt wird. Die Position der Verbindungslöcher 16 ist so gewählt, dass sie gegenüber der Außenkante des Mikrobauteils vorzugsweise um 0,1 bis 1 mm nach innen versetzt sind. Dadurch können Flüssigkeiten von den Mikrokanälen 15 über die Verbindungslöcher 16 leckagefrei in die Reaktionskammer 17 gelangen.

Entsprechend den Positionierstiften 12 an der Deckplatte 3 sind in der Bodenplatte 5 Positionierlöcher 18 gebildet. Der Durchmesser der Positionierlöcher 18 ist im verschweißten Zustand um vorzugsweise 0,5 bis 5 mm kleiner als der Durchmesser der Positionierstifte 12. Im zusammengesetzten Zustand der Platten werden die Mikrokanäle 15 durch die ebene Oberseite der Bodenplatte 5 begrenzt.

Bei der Montage der vorangehend beschriebenen Flusszelle werden zunächst die Mikrobauteile 5 in die Tasche 10 der Deckplatte 3 eingesetzt und anschließend die Zwischenplatte 4 und die Bodenplatte 5 auf die Positionierstifte 12 der Deckplatte 3 aufgesteckt, wobei die Positionierstifte 12 in die Positionierlöcher 13 und 18 der Zwischenplatte bzw. Bodenplatte eintreten.

Mit Hilfe einer Pressvorrichtung wird der Plattenstapel unter Ausübung einer Presskraft vorbestimmter Größe zusammengedrückt. Zur Fixierung der Platten in der zusammengedrückten Position werden die Positionierstifte angeschmolzen und in den Durchgangslöchern verpresst, z.B. im Rahmen eines Ultraschallschweißprozesses. Die dabei unterhalb der Bodenplatte aufgeweiteten Positionierstifte hintergreifen die Bodenplatte und halten nach Abkühlung und Verfestigung den Plattenstapel unter weitgehender Aufrechterhaltung der vorher durch die Pressvorrichtung ausgeübten Presskraft zusammen. Die weiche, zusammengepresste Zwischenplatte gleicht Fertigungstoleranzen der Kunststoffteile aus und wirkt abdichtend, so dass zur Deck- und Bodenplatte hin öffnende Ausnehmungen in der Zwischenplatte, d.h. die Mikrokanäle und Reaktionskammern, flüssigkeitsdicht verschlossen sind.

Die hier beschriebene Flusszelle ist z.B. zum Nachweis von Proben mit einer bestimmten DNA-Sequenz geeignet. In diesem Fall handelt es sich bei dem Mikrobauteil 6 um einen transparenten Glaschip, der auf seiner Unterseite eine Vielzahl von DNA-Sondenmolekülen trägt. Zweckmäßig sind die Abmessungen der die Sondenmoleküle tragenden Detektorfläche kleiner als die lateralen Abmessungen der Tasche 10 der Deckplatte 3. So wird auf einfache Weise die Möglichkeit geschaffen, im Innern der Flusszelle emittierte Lichtquanten, hier Fluoreszenzlicht, durch den Glaschip hindurch mittels konventioneller Detektionsmethoden zu erfassen.

Die Flusszelle kann mit Standardmessgeräten der Biotechnik kompatibel sein.

Zur Durchführung einer Hybridisierung wird eine Probenlösung in den Well eingegeben. Die Probenmenge liegt typischerweise bei wenigen Mikrolitern. Die Strömungsquerschnitte können so gewählt sein, dass die Probenflüssigkeit aufgrund einer Kapillarwirkung des Mikrokanals 15, der Verbindungslöcher 16 und der Reaktionskammer 17 in die Reaktionskammer gelangt und mit der Sondenmoleküle aufweisenden Unterseite des Glaschips in Kontakt kommt. Der transparente Glaschip erlaubt ferner eine visuelle Kontrolle des Füllstands der Reaktionskammer.

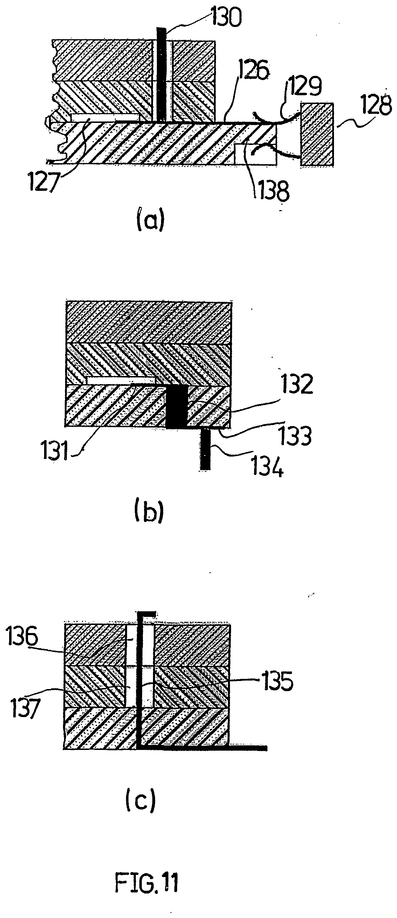

Alternativ zur Füllung durch Kapillarwirkung besteht die Möglichkeit, Probenflüssigkeit in die Reaktionskammer einzusaugen. Hierzu lässt sich der Schlauchanschluss 8 verschließen und der Schlauchanschluss 9 als Probenauslass benutzen und an eine externe Pumpe anschließen. Durch die Pumpe am Probenauslass 8 erzeugter Unterdruck überträgt sich auf die Probenflüssigkeit im Well 7. Die Probenflüssigkeit gelangt so in die Reaktionskammer 17. Dort kommt es mit den DNA-Sonden auf dem Glaschip zu einer Hybridisierungsreaktion. Dieser Vorgang lässt sich dadurch unterstützen, dass mit Hilfe der am Schlauchanschluss 9 angeschlossenen Pumpe im Wechsel ein Unter- bzw. Überdruck aufgebaut wird. So kommt es zu Relativbewegungen der Probenflüssigkeit in bezug auf die Oberfläche des Glaschips. Die Reaktion unterstützen kann auch eine kontinuierliche oder pulsierende Temperierung der Reaktionskammer. Zur Temperierung lassen sich Dünnschichtwiderstände einsetzen, die in Form von elektrischen Leiterbahnen auf der Oberfläche der Bodenplatte angebracht und weiter unten anhand von Fig. 11 erläutert sind. Die Leiterbahnen können direkt unterhalb der Reaktionskammer 17 angeordnet sein. Die durch die Zwischenplatte gebildete Zwischenschicht zwischen der Reaktionskammer und den Leiterbahnen dient dabei der Homogenisierung der Temperaturverteilung über die Bodenfläche der Reaktionskammer.

Zum Spülen der Reaktionskammer nach Beendigung der Hybridisierungsreaktion kann der Schlauchanschluss 8 an ein externes, eine Spülflüssigkeit enthaltendes Reservoir angeschlossen und durch eine an den Schlauchanschluss 9 angeschlossene Pumpe in die Reaktionskammer gesaugt werden. Danach kann durch Fluoreszensmessung unter Detektion durch den transparenten Glaschip tretenden Lichts das Ergebnis der Hybridisierungsreaktion erfasst werden.

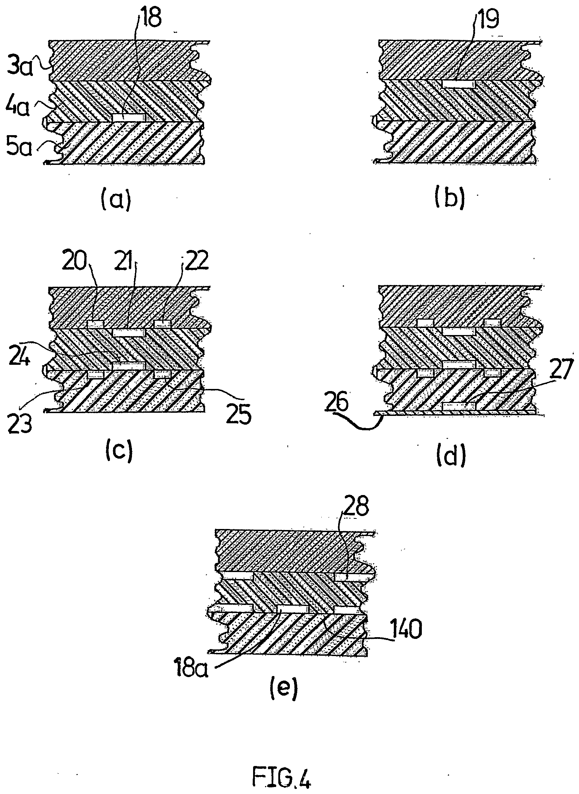

Fig. 4 zeigt verschiedene Möglichkeiten zur Bildung von Mikrokanälen innerhalb einer Anordnung aus einer Deckplatte 3a, einer Zwischenplatte 4a und einer Bodenplatte 5a.

Gemäß Fig. 4a besteht die Möglichkeit, einen Mikrokanal 18 entsprechend der Anordnung des Mikrokanals 15 des vorangehend erläuterten Ausführungsbeispiels an der Unterseite der Zwischenplatte 4a anzuordnen, wobei der Kanal 18 in die Zwischenplatte 4a eingearbeitet und durch die ebene Oberseite der Bodenplatte 5a abgedeckt ist. Die Kanalquerschnittsabmessungen liegen in beiden Raumrichtungen vorzugsweise zwischen 0,01 und 1 mm.

Fig. 4b zeigt einen an der Grenzfläche zwischen der Deckplatte 3a und der Zwischenplatte 4a in die Zwischenplatte 4a eingearbeiteten Mikrokanal 19, der durch die ebene Unterseite der Deckplatte 3a abgedeckt ist.

Bei dem Ausführungsbeispiel von Fig. 4c sind verschiedene Mikrokanäle 20 bis 25 gebildet, sowohl an der Grenzfläche zwischen Deck- und Zwischenplatte wie auch der Zwischen- und Bodenplatte. Die Lage- und Querschnittsabmessungen der Kanäle können an die jeweiligen Anforderungen des betreffenden Fluidnetzwerks der Flusszelle angepasst sein, so dass sogar sehr komplexe Prozesse unter Beteiligung verschiedener Medien in einer solchen Flusszelle ablaufen können. Die Mikrokanäle an jeweils einer Grenzfläche können ineinander übergehen, um z.B. einen Fluidstrom von einem Kanal auf mehrere Kanäle zu verteilen oder umgekehrt von mehreren Kanälen in einen zusammenzuführen. Auch können sich die Mikrokanäle kreuzen, um Fluide dosiert zuzuführen oder zu mischen.

Eine Abdeckfolie 26 gemäß Fig. 4d eröffnet weitere Möglichkeiten zur Bildung von Mikrokanälen 27 und dadurch noch komplexeren Netzwerken. Die Folie 26 kann in üblicher Weise durch Kleben, Schweißen oder Bonden an der Unterseite der Bodenplatte angebracht sein. Die Verwendung einer solchen ergänzenden Folie kommt insbesondere dann in Betracht, wenn es darauf ankommt, Mikrokanäle oder eine Reaktionskammer mit nur geringer Materialdicke abzudecken, z.B. 0,002 mm bis 0,2 mm, wie sie üblicherweise für Folien Verwendung findet. Dünne Folien 26 erlauben die Detektion von Licht durch die Folie hindurch. Zum anderen ermöglicht eine dünne Materialschicht eine effiziente Beheizung hinter der Folie geführter Flüssigkeiten, wie sie bei verschiedenen biochemischen Prozessen, z.B. der PCR, notwendig ist.

Bei dem Ausführungsbeispiel von Fig. 4e sind auf der Oberseite und Unterseite der Zwischenplatte 4a Aussparungen 28 gebildet, welche die Kontaktfläche zwischen den Platten beiderseits eines Mikrokanals 18a verringern. Dadurch erhöht sich in Bereichen 140 die Flächenpressung, d.h. die zur Dichtung erforderliche Anpresskraft wird reduziert. Vorteilhaft reduziert sich dadurch auch die erforderliche Zugspannung der Positionier- bzw. Verbindungsstifte, was den Montageprozess erleichtert und die Haltbarkeit der Flusszelle erhöht.

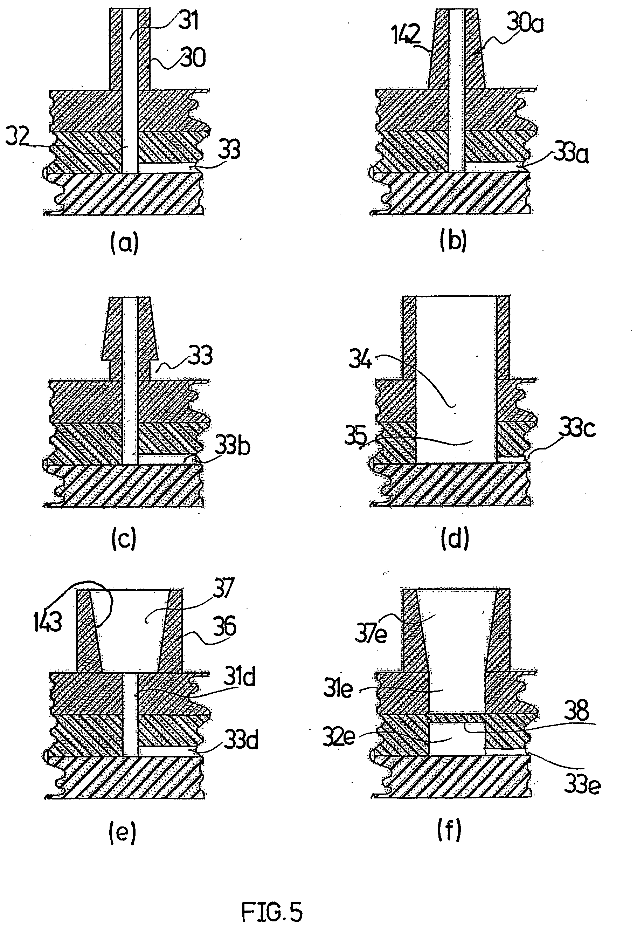

Fig. 5 zeigt verschiedene, z.B. für die Flusszelle von Fig. 1 bis 3 verwendbare Anschlüsse.

Fig. 5a betrifft einen besonders einfachen Anschluss, auf den ein Schlauch aufsteckbar ist. Die Deckplatte ist mit einer Kapillare bestehend aus einer zylindrischen Kapillarwand 30 und einer zylindrischen Kapillaröffnung 31 verbunden. Die Kapillaröffnung 31 setzt sich durch die gesamte Deckplatte hindurch fort. In der Zwischenplatte ist eine Kapillaröffnung 32 gebildet, die in Durchmesser und Position der Kapillaröffnung in der Deckplatte entspricht. Die Kapillaröffnung 32 mündet an der Grenzfläche zur Bodenplatte in einen Mikrokanal 33. Der Außendurchmesser der Kapillarwand 30 liegt typischerweise zwischen 0,5 mm und 2 mm, der Innendurchmesser zwischen 0,1 mm und 1 mm. Die vorstehende Länge des Schlauchanschlusses bewegt sich typischerweise im Bereich von 1 mm bis 10 mm.

Fig. 5b zeigt einen Schlauchanschluss mit einer Kapillarwand 30a, die eine konische Außenfläche 142 aufweist. Vorteilhaft erleichtert der Konus das Aufstecken eines Schlauches. Insbesondere können Schläuche mit unterschiedlichen Innendurch-messern aufgesteckt werden. Typische Konuswinkel liegen zwischen 1 und 15°.

Fig. 5c zeigt einen Schlauchanschluss, der an der Verbindungsstelle zur Deckplatte mit einer Hinterschneidung 33 versehen ist, durch welche vorteilhaft die Haltekraft für einen auf den Anschluss aufgesteckten Schlauch erhöht wird.

Gemäß Fig. 5d ist ein Anschluss gebildet, dessen den Kapillaröffnungen 31 und 32 entsprechende Öffnungen zu Reservoirvolumen bzw. Wells 34 und 35 erweitert sind. Das Reservoirvolumen 35 steht in Verbindung mit einem Mikrokanal 33c. Typische Außendurchmesser einer Kapillarwand 30c liegen zwischen 3 mm und 10 mm, typische Innendurchmesser zwischen 2 mm und 9 mm. Die von der Deckplatte vorstehende Länge liegt typischerweise im Bereich von 0,1 bis 10 mm.

Fig. 5e zeigt einen Anschluss in Form einer Steckverbindung mit einer Steckerwand 36 und einer Steckeröffnung 37, die auf der Oberseite der Deckplatte endet und einen Innenkonus aufweist. In die Steckeröffnung 37 lässt sich ein konisches, mit einem Schlauch verbundenes Anschlussstück einsetzen, das an der konischen Innenfläche 143 fluiddicht haftet. Der Konuswinkel liegt vorzugsweise zwischen 2 und 10°. Der Innendurchmesser einer Kapillaröffnung 31 d in der Deckplatte ist gleich dem Innen-durchmesser des Anschlüssstücks und zu diesem ausgerichtet. Totvolumen an der Verbindungsstelle lassen sich so vermeiden.

Bei dem Ausführungsbeispiel von Fig. 5f für einen Anschluss schließt sich an eine Steckeröffnung 37e mit konischer Innenfläche 142 unmittelbar ohne Durchmesseränderung eine Öffnung 31 e in der Deckplatte an. Zu der Öffnung 31 e ausgerichtet ist ein Reservoirvolumen 32e in der Zwischenplatte, das von der Öffnung 31 e durch eine Zwischenwand 38, die als Septum dient, getrennt ist. Für den Fall, dass Flüssigkeit mit Hilfe einer Spritzennadel in die Flusszelle eingegeben werden soll, wird die Trennwand 38 mit der Spritzennadel durchstochen. Durch geeignet weiches und elastisches Material der Trennwand ist gesichert, dass die Durchstichstelle nach dem Entfernen der Spritzennadel wieder fluiddicht verschlossen ist. Typische Seitenlängen des Septums liegen zwischen 1 mm und 5 mm. Die Dicke bewegt sich bevorzugt zwischen 0,05 und 0,5 mm. Letztere Ausführungsform ist besonders dann vorteilhaft, wenn die Flusszelle Mikrobauteile oder sonstige Bereiche aufweist, die im Zeitraum zwischen der Herstellung und Verwendung der Flusszelle, während ihrer Verwendung und/oder nach Entsorgung nicht der Außenumgebung ausgesetzt sein dürfen und sogar gasdicht verschlossen sein müssen, um z.B. Sauerstoffzutritt oder Verdunstung eingeschlossener Flüssigkeiten zu vermeiden. Ferner ist diese Ausführungsform bei automatisierter Ein- und Ausbringung von Flüssigkeiten vorteilhaft, wobei verwendete Spritzennadeln in solche Dosiersysteme integriert sein können. Ferner ist ein solcher Anschluss vorteilhaft, wenn gesichert werden soll, dass Luft aus den Mikrokanälen und Reaktionskammern entweichen kann. Über das Septum durchstechende Hohl-nadeln kann Luft aus der Flusszelle ausströmen und ggf. abgesaugt werden. So lassen sich in der Flusszelle ablaufende komplexe Prozesse steuern.

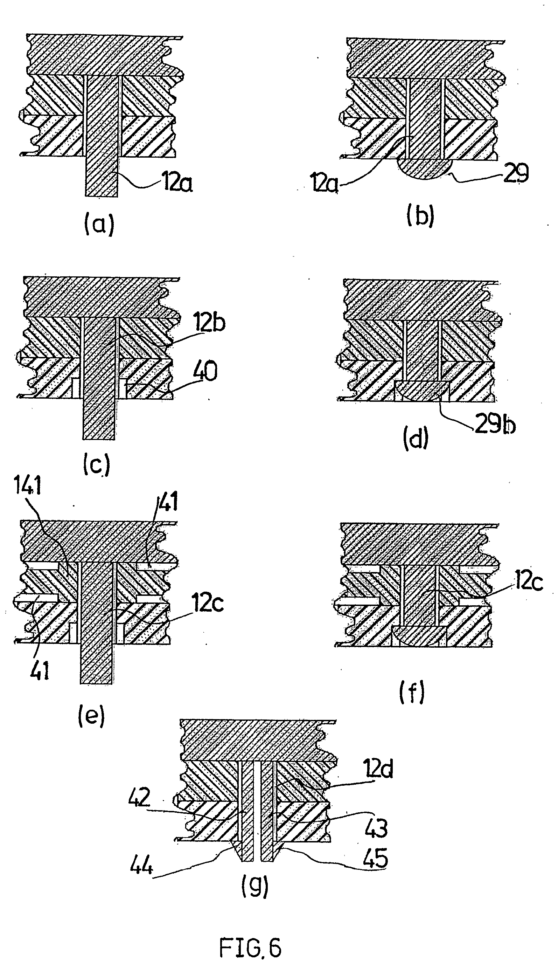

Fig. 6 zeigt verschiedene Varianten für die Positionierung und Verbindung der Deck-, Zwischen- und Bodenplatte.

Gemäß Fig. 6a und 6b ist an der Unterseite der Deckplatte ein vorzugsweise zylindrischer Positionierstift 12a gebildet, der einstückig mit der Deckplatte verbunden ist. Die Zwischenplatte und die Bodenplatte weisen entsprechend angeordnete Positionierlöcher auf. Der Innendurchmesser der Löcher ist gegenüber dem Durchmesser der Positionierstifte um 0,1 mm bis 0,2 mm vergrößert. Die Länge des Positionierstifts ist um 0,5 mm bis 5 mm größer als die Summe der Höhe von Zwischen- und Bodenplatte. Bei der Montage der Flusszelle werden die Platten mit Hilfe einer Pressvorrichtung senkrecht zur Plattenebene zusammengepresst. Die Stifte werden unter mechanischer Einwirkung, thermischer Einwirkung oder/und Ultraschalleinwirkung verpresst und gemäß Fig. 6b jeweils ein Kopf 39 gebildet. Gegebenenfalls nach Abkühlung und Lösen der Pressvorrichtung hält der Kopf 39 die Platten zusammen, wobei die durch die Pressvorrichtung vorher ausgeübte Presskraft in ihrer Größe weitgehend erhalten bleibt.

Bei der Ausführungsform von Fig. 6c und 6d ist an der Unterseite der Bodenplatte eine Positionieröffnung mit einer Aufweitung 40 gebildet, deren Höhe so gewählt ist, dass sie einen in der obengenannten Weise gebildeten Kopf 29b aufnehmen kann, wobei der Kopf 29b vorzugsweise von der Unterseite der Bodenplatte in die Aufweitung hinein zurückversetzt ist. Vorteilhaft weist die Flusszelle dann eine ebene Auflagefläche zur stabilen Auflage auf einem ebenen Untergrund auf.

Gemäß Fig. 6e und 6f weist eine weiche und/oder elastische Zwischenplatte auf der Oberseite und Unterseite Aussparungen 41 auf, durch welche die Anlagefläche zwischen den Platten auf einen Bereich 141 um die Positionierlöcher reduziert ist. Fluiddichtheit wird daher bei geringerer Anpresskraft erreicht. Vorteilhaft verringert sich die Zugspannung der Positionierstifte bzw. Verbindungsstifte, die Flusszelle steht daher unter verringerter innerer Spannung, was ihre Haltbarkeit erhöht. Der Montageprozess wird erleichtert.

Bei dem Ausführungsbeispiel von Fig. 6g sind Positionierstifte 12d vorgesehen, die federnd ausgebildet sind und zwei zueinander im Abstand angeordnete Federarme 42 und 43 mit einer hinterschnittenen Aufweitung 44 bzw. 45 am freien Ende aufweisen. Die Zwischenplatte und die Bodenplatte lassen sich auf die Stifte 12d aufstecken, wobei die Federarme 42,43 zusammengedrückt werden und sich nach Durchführen der Aufweitungen 44,45 durch die Platten wieder aufspreizen. Dabei halten die Aufweitungen die Platten zusammen. Vorteilhaft bedarf es zur Montage kaum einer mechanischen und keiner thermischen Belastung des Positionierstifts 12d und der Platten.

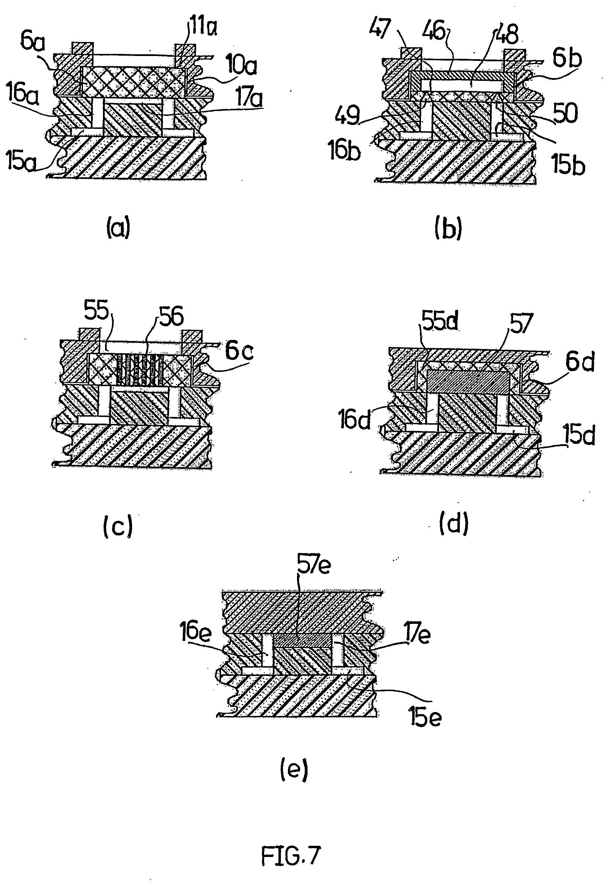

Fig. 7 zeigt verschiedene Varianten von Mikrobauteilen und deren Integration in die Flusszelle.

Gemäß Fig. 7a ist in eine rechteckige Tasche 10a mit einer Schulter 11a ein einstückiges Mikrobauteil 6a eingesetzt. Die Seitenlängen der Schulter sind gegenüber den Seitenlängen des Mikrobauteils um 0,01 mm bis 0,1 mm vergrößert. Das gegen die Schulter 11 a anliegende Mikrobauteil 5a steht aus der Tasche 10a um 0,01 bis 0,1 mm weit vor. Dadurch ist der Rand des Mikrobauteils durch die Zwischenplatte abgedichtet. In die Zwischenplatte sind Ausnehmungen für eine Reaktionskammer 17a, Verbindungslöcher 16a und Mikrokanäle 15a eingebracht.

Die Reaktionskammer 17a wird einseitig durch das Mikrobauteil 6a begrenzt. Die Verbindungslöcher 16a sind um etwa 0,1 mm bis 1 mm gegenüber der Außenkante des Mikrobauteils 6a nach innen versetzt. Dadurch kann Flüssigkeit leckagefrei von den Mikrokanälen über die Verbindungslöcher in die Reaktionskammer transportiert werden. Das Mikrobauteil wird in der Tasche formschlüssig ohne Kleb- oder Schweißverbindung zu einer der Platten positionsgenau gehalten. Beeinträchtigungen funktionalisierter Oberflächen durch Klebstoff oder Schweißwärme sind ausgeschlossen.

Dem einstückigen Mikrobauteil können verschiedene Funktionen zukommen. Ein unstrukturiertes Mikrobauteil aus Glas kann lediglich als Fenster dienen, durch das hindurch der Reaktionsverlauf innerhalb der Flusszelle beobachtet und/oder detektiert werden kann. Ein Mikrobauteil als Glas, Silizium, Metall oder Kunststoff, auf dessen Unterseite sich gebundene Moleküle, insbesondere DNA-Sonden in einer Matrixanordnung befinden, kann für den oben beschriebenen Hybridisierungsprozess in der Flusszelle verwendet werden. Ein Mikrobauteil aus Metall lässt sich z.B. als Katalysator verwenden, der die in der Reaktionskammer ablaufenden Prozesse steuert. Das Mikrobauteil könnte ferner ein Wärmeleiter sein, welcher Wärme aus einer externen Quelle in die Reaktionskammer überträgt. Bei dem Mikrobauteil kann es sich ferner um einen elektrischen Leiter handeln, der eine Elektrode bildet, z.B. um auf der Basis von Elektroforese oder -osmose Flüssigkeit innerhalb der Flusszelle zu transportieren.

Fig. 7b zeigt ausschnittsweise eine Flusszelle mit einem zweistückigen Mikrobauteil 6b. Es besteht aus einem Deckel 46 und einem Boden 47, wobei Deckel und Boden fluiddicht miteinander verbunden sind. Zwischen Deckel und Boden ist eine Kammer 48 gebildet, die als Reaktionskammer oder Mikrokanal dienen kann. Die Kammer 48 steht über Öffnungen 49 und 50 und Verbindungslöcher 16b mit Mikrokanälen 15b in der Zwischenplatte in Verbindung. Ein solcher Aufbau ist vorteilhaft, wenn für ein Fluidnetzwerk Kapillaröffnungen und/oder Kanäle notwendig sind, deren Abmessungen wenigstens in einer Richtung senkrecht zur Fluidströmung zwischen 0,1 µm und 5 µm liegen und daher nicht oder nur mit sehr großem Aufwand mittels Abformtechniken als integraler Bestandteil der Deck-, Zwischen- oder Bodenplatte hergestellt werden können. In diesen Fällen bieten sich für den Mikrobauteil Kombinationen aus einem Siliziumboden und einem Glasdeckel an. Die Teile lassen sich mit Hilfe bekannter Bondtechniken fluiddicht verbinden, wobei der Siliziumteil geätzte Strukturen im Submikrometerbereich aufweisen kann.

Fig. 7c zeigt ein Mikrobauteil 6c, das aus einem Grundkörper 55 besteht, in den mehrere Mikroelektroden 56 fest eingebettet sind, die ein Elektrodenfeld bilden. Als Materialien für den Grundkörper 55 kommen Keramik oder Kunststoff in Betracht, für die Elektroden Metalle wie Gold, Silber, Platin, aber auch elektrisch leitende Kunststoffkompounds mit Metall- oder Kohlefasern. Ferner sind für die Elektroden leitende Kunststoffe wie Polyanilin, Polypyrol oder Polythiophen verwendbar. Solche Mikrobauteile mit Mikroelektrodenfeldern ermöglichen den Aufbau von Flusszellen mit Hybridisierungskammern unter Verwendung bekannter elektrischer Nachweismethoden.

Aus Fig. 7d geht ein weiteres zweistückiges Mikrobauteil 6d hervor, das aus einem Grundkörper 55d besteht, in den ein Filterelement 57 eingelassen ist. Das Filterelement besteht aus einem porösen, schwammartigen Material, vorzugsweise Kunststoff, mit Poren, deren Abmessungen typischerweise im Bereich zwischen 0,1 µm und 100 µm liegen. Das Filterelement steht über Verbindungslöcher 16d mit Mikrokanälen 15d in Kontakt, die an der Grenze zwischen der Zwischenplatte und der Bodenplatte gebildet sind. Durch das Filterelement 57 können durch die Flusszelle transportierte Medien in einfacher Weise gefiltert werden, wobei die Flüssigkeit z.B. über eines der Verbindungslöcher in das Filterelement ein- und am Verbindungsloch aus dem Filter austritt. Das Filterelement kann ferner als Kapillarpumpe dienen. Kommt das Medium durch Kapillarwirkung über die Mikrokanäle 15d mit dem Filtermaterial in Kontakt, wird es in das feinporige Filtermaterial hineingesaugt. So kann der Fluidstrom an anderer Stelle des Fluidnetzwerkes gesteuert werden. Der Fluidstrom kommt zum Erliegen, wenn die Aufnahmekapazität des Filtermaterials erschöpft ist. Ein solches Mikrobauteil kann ferner verwendet werden, um nach Beendigung eines Prozesses in der Flusszelle, z.B. einer Analyse, Reaktionsprodukte oder andere Medien wie in einem Abfallbehälter zu speichern. Dieser Behälter kann auch bei der Entsorgung der Flusszelle verhindern, dass Flüssigkeit ungewollt austritt.

Bei dem Ausführungsbeispiel von Fig. 7e ist eine in die Zwischenplatte eingearbeitete Reaktionskammer 17e mit einem Filterelement 57e gefüllt. Das Filterelement steht über Verbindungslöcher 16e in Verbindung mit Mikrokanälen 15e. Bei diesem Ausführungsbeispiel braucht die Deckplatte im Bereich des Filterelements keinerlei Aufnahmetasche oder sonstige Struktur aufzuweisen, was die Konstruktion der Flusszelle vereinfacht.

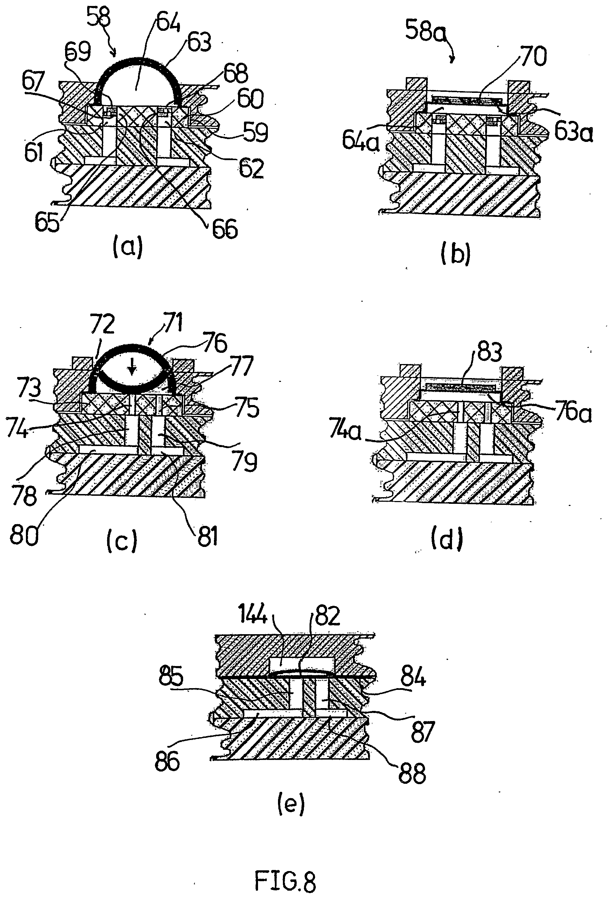

Es wird nun auf Fig. 8 Bezug genommen, wo Beispiele für die Integration von Mikropumpen und Mikroventilen in eine Flusszelle, die eine Deckplatte, Zwischenplatte und Bodenplatte aufweist, gezeigt sind.

Gemäß Fig. 8a ist eine Mikropumpe 58 in eine vorzugsweise zylindrische Tasche 59 an der Oberseite der Deckplatte eingesetzt. Die Pumpe weist einen Grundkörper 60 mit einem Einlasskanal 61 und einem Auslasskanal 62 auf. Auf dem Grundkörper ist eine elastische Aktormembran 63 angeordnet, die in ihrem Randbereich fest mit dem Grundkörper verbunden ist und zwischen der Aktormembran und dem Grundkörper eine Pumpkavität 64 bildet. Angrenzend an die Pumpkavität ist im Einlasskanal ein Einlassventil 65 und im Auslasskanal ein Auslassventil 66 angeordnet. Die Ventile weisen jeweils einen Sitzbauteil 67 mit einer Öffnung 68 und einen die Öffnung schließenden oder freigebenden Federbauteil 69 auf. Periodisches Betätigen der Aktormembran 64 führt zu wechselseitigem Öffnen und Schließen des Ein- und Auslassventils, so dass Fluid vom Einlasskanal in den Auslasskanal transportiert wird. In der einseitig offenen Tasche sind die Ventile von außen zugänglich. Entsprechend kann eine externe Einrichtung zur Betätigung der Aktormembran 63 verwendet werden. Im einfachsten Fall weist diese Einrichtung einen Stempel auf, der die z.B. halbkugelförmig geformte Aktormembran zusammendrückt und durch Zurücksetzen eine elastische Wiederausdehnung der Membran erlaubt. Vorteilhaft wird in die Flusszelle eine Pumpfunktion durch ein vorgefertigtes, in die Zelle eingeschlossenes Bauteil integriert, wobei verschiedene Ausführungen von Pumpen, z.B. mit unterschiedlichen Flussraten, oder Pumpen aus verschiedenen Materialien, wie Kunststoff oder Silizium, nach Bedarf flexibel mit geringem Aufwand fertigungssicher eingebaut werden können. Zum Betrieb der Pumpe ist nur eine mechanische Schnittstelle erforderlich, z.B. in Form eines Stempels oder im einfachsten Fall manueller Bedienung, was den Aufwand für ein externes Pumpgerät zum Betrieb der Flusszelle gering hält.

Eine in Fig. 8b gezeigte, in eine Flusszelle integrierte Mikropumpe 58a weist eine Pumpmembran 63a auf, die mit eine Piezoscheibe 70 verklebt ist. Periodisches Anlegen einer Spannung, vorzugsweise zwischen +400 Volt und -100 Volt führt zu einer Auslenkung der Pumpmembran nach unten oder oben und damit zur Verkleinerung und Vergrößerung des Volumens einer Pumpkavität 64a. Die Mikropumpe kann Abmessungen aufweisen, die in jeder Raumrichtung nur wenige Millimeter betragen, so dass die Pumpe innerhalb der Flusszelle nur wenig Platz benötigt. Der Einsatz solcher Pumpen kommt insbesondere dann in Betracht, wenn sie aus Silizium bestehen sollen, dessen Eigenschaften eine mechanische Kontaktierung von außen nicht erlauben, oder wenn überhaupt eine Betätigung der Pumpe von außen nicht möglich ist. Für den Betrieb der Pumpe ist lediglich ein elektrischer Anschluss erforderlich.

Fig. 8c zeigt die Integration eines Mikroventils 71 in eine Flusszelle. Das in einer vorzugsweise zylinderförmigen Tasche 72 in der Deckplatte angeordnete Mikroventil 71 weist einen Grundkörper 73 mit einem Einlasskanal 74 und einem Auslasskanal 75 auf, wobei wenigstens einer der Kanäle exzentrisch angeordnet ist. Randseitig mit dem Grundkörper verbunden ist eine elastische, vorzugsweise in der Form einer Halbkugelschale hergestellte Aktormembran 76, wobei zwischen der Aktormembran und dem Grundkörper ein Flussbereich 77 gebildet ist. Im unverformten Zustand der Aktormembran verbindet das Ventil über Verbindungslöcher 78 und 79 Mikrokanäle 80 und 81 in der Zwischenplatte. Durch Eindrücken der Aktormembran lässt sich der Einlasskanal 74 verschließen und damit die Durchströmung des Flussbereichs unterbrechen. Da das Mikroventil von außen zugänglich ist, kann es durch eine externe Einrichtung in ähnlicher Weise wie die oben beschriebene Mikropumpe betätigt werden. Vorteilhaft wird eine Ventilfunktion durch Einschluss eines vorgefertigten Bauteils in die Flusszelle integriert, wobei der Montageaufwand gering und eine hohe Flexibilität in bezug auf die Verwendung verschiedener Ventilaufbauten gegeben ist.

Fig. 8d zeigt eine weitere Variante für die Integration eines Mikroventils. Anstelle der halbkugelförmigen elastischen Aktormembran ist eine ebene Aktormembran 76a vorgesehen, die mit einer Piezoscheibe 83 verklebt ist. Durch Anlegen einer Spannung, vorzugsweise +400 Volt, ergibt sich eine Auslenkung der Aktormembran nach unten, wodurch ein Einlasskanal 74a verschlossen und der Fluidstrom durch das Ventil unterbrochen wird. Beim Abschalten der Spannung nimmt die Aktormembran wieder ihre ursprüngliche ebene Form an, so dass der Fluidtransport wieder freigegeben ist. Diese Ausführungsform ist vorteilhaft, wenn Ventile mit besonders kleinen Abmessungen von nur wenigen Millimetern in jeder Raumrichtung in die Flusszelle integriert werden sollen oder Mikroventile aus Silizium integriert werden sollen, deren sprödes Material eine Betätigung von außen nicht zulässt, oder wenn eine Betätigung von außen ohnehin nicht möglich oder zweckmäßig ist. Zum Betrieb des Ventils bedarf es lediglich elektrischer Anschlüsse zur Flusszelle.

Fig. 8e zeigt ein weiteres Beispiel für die Integration eines Mikroventils in eine Flusszelle. Eine Deckplatte weist an ihrer Unterseite eine mit der Deckplatte z.B. durch Kleben oder Schweißen verbundene Folie 84 auf. In der Zwischenplatte ist ein Verbindungsloch 85 gebildet, das als Ventileinlass dient und mit einem Mikrokanal 86 an der Unterseite der Zwischenplatte in Fluidverbindung steht. Ein weiteres Verbindungsloch 87 dient als Ventilauslass und steht mit einem Mikrokanal 88 in der Zwischenplatte in Verbindung. Die lateralen Abmessungen des Mikrokanals sind vorzugsweise größer als die Querschnittsabmessungen der Verbindungslöcher. Liegt am Ventileinlass ein Fluid unter Druck an, führt dies zur Auslenkung der Folie 84 in eine Ausnehmung 144 in der Deckplatte hinein. Im ausgelenkten Zustand kann Fluid durch einen Flussbereich 82 des Ventils hindurchtreten. Liegt an der Ausnehmung 144 ein z.B. mit Hilfe einer externen Pumpe erzeugter Gegendruck an, vorzugsweise ein Luftdruck, so führt dies zum Zurücksetzen und Anliegen der Ventilfolie an der Oberseite der Zwischenplatte und zum Verschließen des Ventileinlasses. Vorteilhaft wird eine Ventilfunktion lediglich durch eine Ventilfolie ohne zusätzliche Mikrobauteile in die Flusszelle integriert.

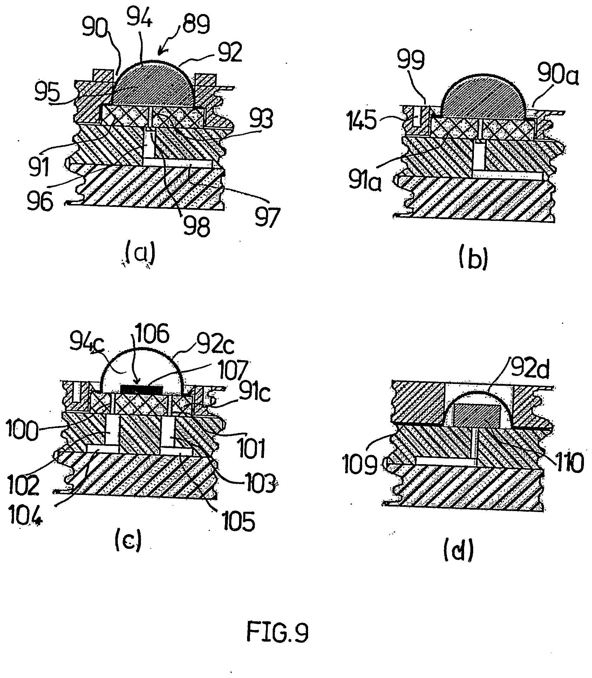

Fig. 9 zeigt verschiedene Ausführungsformen für die Integration von Flüssigkeitsspeichern in eine Flusszelle.

Gemäß Fig. 9a ist ein Speicher 89 in eine Tasche 90 in der Deckplatte eingesetzt. Der Speicher besteht aus einem vorzugsweise zylindrischen Grundkörper 91 und einer Speicherabdeckung 92 in Form einer z.B. durch Thermoformen gebildeten Halbkugelschale. Durch den Grundkörper führt eine Kapillare 93. Ein Speichervolumen 94 ist wenigstens teilweise mit einer Flüssigkeit 95, z.B. einer Pufferlösung, gefüllt, welche für den Betrieb der Flusszelle, z.B. zum Spülen, erforderlich ist. Das Speichervolumen 94 steht über die Kapillare 93 und ein Verbindungsloch 96 in Verbindung mit einem Mikrokanal 97 in der Zwischenplatte. Um ungewolltes Austreten von Flüssigkeit aus dem Speicher zu vermeiden, z.B. durch Erschütterung der Flusszelle, weist die Zwischenplatte an ihrer Oberseite ein Federelement 98 auf, das die Kapillare 93 fluiddicht abschließt. Zum Freisetzen im Speicher enthaltener Flüssigkeit wird auf die Abdeckung 92 Druck ausgeübt. Bei Dicken der Speicherabdeckung zwischen 0,02 mm und 0,2 mm führt dies zur Deformation und damit zur Verdrängung von Flüssigkeit aus dem Speicher. Typische Speichervolumen solcher Art liegen zwischen 10 und 1000 Mikrolitern. Vorteilhaft kann durch den beschriebenen Speicher der geräte-technische Aufwand zum Betrieb der Flusszelle gering gehalten werden. Die Flusszelle lässt sich z.B. vor Ort unabhängig von Laborgeräten, wie z.B. Dosier- oder Befüllgeräten, einsetzen.

In einer in Fig. 9b gezeigten Ausführungsform ist in einer Deckplatte eine Tasche 90a vorgesehen. An der Tasche sind durch Ausnehmungen 145 einander gegenüber-liegende Federelemente 99 mit einer Rastnase gebildet. Zur fluiddichten Verbindung des Speichers mit der Flusszelle wird der Speicher in die Tasche der bereits fertiggestellten Flusszelle eingedrückt, wobei er an den Federelementen 99 einrastet und durch die Federkraft fluiddicht in der Tasche 90a festgehalten wird. Vorteilhaft kann ein Speicher wahlweise erst nach Herstellung und Montage der Flusszelle integriert werden. Für den Anwender bedeutet dies mehr Flexibilität in der Nutzung der Flusszelle. Insbesondere können verschiedene Fluide bei gleichem Flusszellenaufbau verwendbar sein. Im übrigen entspricht die Ausführung von Fig. 9b der Ausführung von Fig. 9a.

Fig. 9c zeigt einen in eine Flusszelle integrierten Speicher mit einem Grundkörper 91 c, in dem ein Speichereingang 100 und ein Speicherausgang 101 gebildet ist. Speicherein- und -ausgang stehen über Verbindungslöcher 102 und 103 in Verbindung mit Mikrokanälen 104 und 105 an der Grenzfläche zwischen der Zwischenplatte und Bodenplatte. Eine Abdeckung 92c aus einer thermisch verformten Folie ist randseitig mit dem Grundkörper 91 c verbunden. Innerhalb eines Speichervolumens 94c ist ein Bereich 106 gebildet, der in die Flusszelle einzufüllende Flüssigkeit in Form einer Trockenreagenz 107 enthält. Zur Freisetzung der Trockenreagenz lässt sich eine Spülflüssigkeit einfüllen, in der sich die Trockenreagenz löst, wobei sie kontinuierlich oder diskontinuierlich über den Speicherausgang 101 in die Zwischenplatte hinein transportiert werden kann.

In einer weiteren Ausführungsform gemäß Fig. 9d ist in der Deckplatte eine Aussparung 108 vorgesehen. An ihrem der Zwischenplatte zugewandten Öffnungsrand ist mittels Kleben oder Schweißen eine Folie 109 fixiert, die innerhalb der Aussparung zur Abdeckung des Speichers gewölbt ist. Zwischen der Oberseite der Zwischenplatte und der Abdeckung befindet sich ein Flüssigkeitsträger 109 in Form z.B. eines Schwammes, der Flüssigkeit durch Kapillarwirkung festhält und einen unerwünschten Transport von Flüssigkeit während der Montage oder während des Betriebs der Flusszelle verhindert. Durch plastische Deformation einer durch die Folie 109 gebildeten Speicherabdeckung 92d lässt sich Flüssigkeit aus dem Speicher freisetzen. Bei der Montage der Flusszelle wird der Flüssigkeitsträger 110 mit der sich darin befindlichen Flüssigkeit auf der mit der Folie fest verbundenen Deckplatte im Bereich der Speicherabdeckung 92d abgelegt und anschließend die Flusszelle montiert. Der beschriebene Aufbau ist vorteilhaft, weil der Speicher sehr einfach aufgebaut ist und daher die Flusszelle mit Speicherelementen für Massenanwendungen, bei denen eine Integration eines vorgefertigten, in der Flusszelle eingeschlossenen Speicherelements nicht in Frage kommt, kostengünstig hergestellt werden kann.

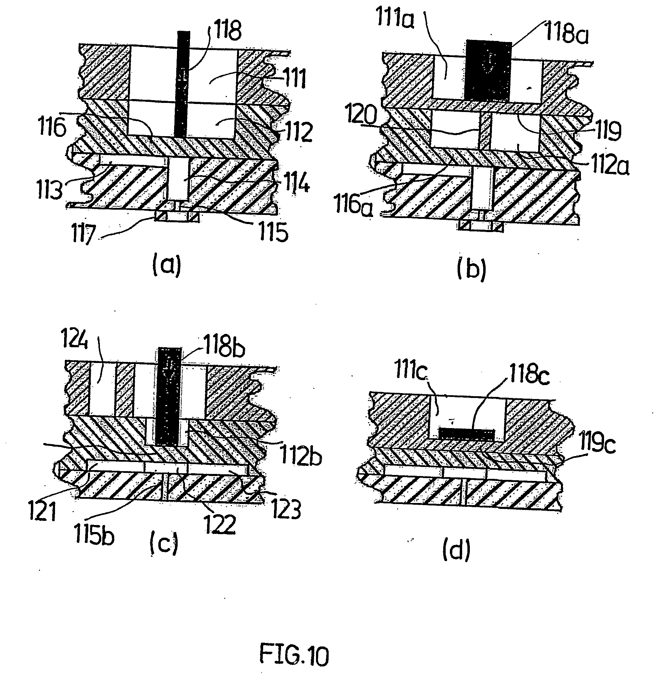

Fig. 10 zeigt verschiedene Ausführungsbeispiele für die Integration eines Dispensers in eine Flusszelle. Dispenser werden in der Flusszelle verwendet, um bestimmte Volumen einer in der Flusszelle befindlichen Flüssigkeit aus der Flusszelle herauszubefördern. Übliche Dispensiervolumen liegen im Bereich von einigen 100 Pikolitern bis einigen Mikrolitern.

Fig. 10a zeigt eine erste Ausführungsform mit einer Aussparung 111, die sich durchgehend durch die Deckplatte hindurch und unter Bildung einer Tasche 112 in die Zwischenplatte hinein erstreckt. Durch einen Mikrokanal 113 in der Bodenplatte wird Flüssigkeit in den Dispenser eingeleitet. Der Mikrokanal 113 mündet in eine Vertiefung 114 in der Bodenplatte ein, an deren Unterseite sich eine Mikrokapillare 115 durch die restliche Dicke der Bodenplatte erstreckt und deren Oberseite fluiddicht durch einen Bereich 116 der Zwischenplatte abgedeckt ist, welcher als Federelement wirkt. Von der Unterseite der Bodenplatte steht eine Ringwand 117 vor, welche die Austrittsöffnung der Mikrokapillare 115 ringförmig umschließt. Zur Betätigung des Dispensers dient ein externer, stempelartiger Aktor 118, dessen Außendurchmesser vorzugsweise kleiner als der Durchmesser der Vertiefung 114 ist. Sind Mikrokanal und Vertiefung mit Flüssigkeit gefüllt, führt eine kurzzeitige Betätigung des Aktors im Millisekundenbereich zu einem Vorschub von einigen Mikrometern bis zu einigen hundert Mikrometern zu einer Verkleinerung des Volumens in der Vertiefung und damit zu einem Tropfenausstoß aus der Kapillare 115. Vorteilhaft kann die Ringwand 117 nicht senkrecht zur Oberfläche der Bodenfläche austretende Tropfen auffangen und unerwünschte Kontaminationen vermeiden.

Bei einer in Fig. 10b dargestellten Ausführungsform ist eine Aussparung 111a nicht durch die gesamte Deckplatte hindurchgeführt. Es verbleibt ein als Tellerfeder wirkender Bodenbereich 119. Von der Unterseite des Bodenbereichs erstreckt sich durch eine in der Zwischenplatte gebildete Tasche 112a hindurch ein Stößel 120. Der Stößel könnte einstückig mit dem Bodenbereich 119 oder einem Bodenbereich 116a der Tasche 111 a verbunden sein. Ein externer Aktor 118a betätigt über den Bodenbereich 119 den Stößel 120, wodurch es zum Austritt von Tropfen in der anhand von Fig. 10a beschriebenen Weise kommt. Diese Ausführungsform ist vorteilhaft, weil durch Vorpositionierung des Stößels die Anforderungen an die Genauigkeit der Anordnung des externen Aktors 118a und damit eines externen Betriebsgeräts verringert werden.

Bei dem Ausführungsbeispiel von Fig. 10c ist in einer Bodenplatte lediglich eine durch ihre gesamte Dicke durchgehende Mikrokapillare 115b gebildet, die einfach herstellbar ist. Die Zwischenplatte weist neben einer Tasche 112b einen Eingangskanal 121, einen Dispensierbereich 122 und einen Ausgangskanal 123 auf. Wird Flüssigkeit durch den Eingangskanal hindurch transportiert, so kann, bei Durchsichtigkeit der Boden- oder/und Zwischenplatte, über eine Zeit t ein bestimmter Ausschnitt einer strömenden Flüssigkeit durch ein Sichtfenster 124 in der Deckplatte oder durch die Bodenplatte hindurch detektiert werden. Eine Detektion kann auch mit Hilfe eines Lichtquanten erfassenden oder anderen Sensors erfolgen. Bei bekannter Fließgeschwindigkeit und Abmessung des Eingangskanals erreicht dieser Abschnitt nach einer Zeit t + t1 den Dispensierbereich 122 und kann dort mit Hilfe eines externen Aktors 118b ausgestoßen werden. Dazu braucht der Fluidtransport in Richtung des Ausgangskanals 123 nicht unterbrochen zu werden. Eine solche Ausführungsform erlaubt den Ausstoß von bestimmten, vorher festgelegten Flüssigkeitsportionen oder sich in der Flüssigkeit befindender Mikropartikel, wie z.B. Zellen.

Ein in Fig. 10d gezeigter Dispenser verwendet einen integrierten Aktor 118c in Form einer Piezoscheibe, die in einer Ausnehmung 111 c auf einem Bodenbereich 119c, der eine Aktormembran bildet, aufsitzt. Die mit dem Bodenbereich 119c verklebte Piezoscheibe wölbt bei Anlegen einer Spannung von +400 Volt den Bodenbereich 119c, so dass es zum Ausstoß von Tropfen kommt. In dem betreffenden Ausführungsbeispiel ist die Zwischenplatte dünner als bei dem vorangehenden Ausführungsbeispiel.

Für einen flexiblen Einsatz von Flusszellen sind Ausführungen erforderlich, in die elektrische Funktionselemente und Leiterbahnen integriert sind, welche von außen in einfacher Weise kontaktiert werden können. So werden vorzugsweise Elektroden als Antrieb für den Transport von Flüssigkeiten mittels Elektroforese, als Sensorelemente oder auch zur Kontaktierung von integrierten, z.B. piezoelektrischen Aktoren, verwendet. Fig. 11 zeigt verschiedene Ausführungsformen.

Am meisten bevorzugt ist eine Ausführungsform, wie sie in Fig. 11 a gezeigt ist. Die Bodenplatte weist an ihrer Oberseite eine metallische Elektrode 126 auf, die in einen Teilbereich eines Mikrokanals 127 hineinreicht und dort mit darin befindlicher Flüssigkeit in Kontakt kommen kann. Die Herstellung einer solchen Elektrode lässt sich kostengünstig mittels Dünnschichttechniken durchführen, wie z.B. Sputtern, oder mittels Dickschichttechniken, wie z.B. im Siebdruckverfahren. Als Elektrodenmaterialien eignen sich z.B. Aluminium, Gold und Platin. Als Materialien für die Bodenplatte kommen Kunststoff, Keramik oder auch Leiterplattenmaterial in Betracht. Eine elektrische Kontaktierung von außen lässt sich mit Hilfe eines Federkontakte 129 aufweisenden Steckverbinders 128 an einem vom Rand der Flusszelle vorstehenden Bereich 138 der Bodenplatte herstellen. Alternativ kann eine Kontaktierung über Stifte 130 erfolgen, die durch Aussparungen in der Zwischenplatte und in der Deckplatte geführt sind. Diese Ausführungsform ist vorteilhaft, weil sich die Elektroden auf einfache Weise auf die Plattenoberfläche aufbringen und sich dadurch auch komplexe Elektrodenanordnungen mit geringem Aufwand herstellen lassen.

Fig. 11b zeigt eine Ausführungsform mit einem eine Elektrode bildenden Innenleiter 131, einer Durchkontaktierung 132 und einem Außenleiter 133. Die Leiter werden vorzugsweise im Siebdruckverfahren hergestellt. Die Kontaktierung des Außenleiters erfolgt mit Hilfe eines Stifts 134, der gegen die frei zugängliche Unterseite der Bodenplatte gedrückt wird. Vorteilhaft erfordert diese Ausführungsform nur eine geringe Elektrodenlänge und damit kleine Übergangswiderstände. Elektroden und Kontaktierungen sind in hoher Dichte möglich, wobei die Kontaktierung durch Kontaktstiftfelder erfolgen kann. Die elektrische Kontaktierung auf der Unterseite der Bodenplatte ist von der dem Fluid ausgesetzten Kontaktierung auf der Oberseite der Bodenplatte räumlich ausreichend getrennt.

Fig. 11c zeigt eine Ausführungsform mit einer Elektrode 135 in Form eines Stanz- oder/und Biegeteils, welches in die Bodenplatte mittels Einlegetechnik eingespritzt ist. Vorteilhaft weisen die Zwischenplatte und die Deckplatte eine Aussparung 136 bzw. 137 auf, durch welche hindurch die Elektrode in Form einer Zunge geführt ist. Dadurch steht auf der Oberseite der Deckplatte ein elektrischer Kontakt zur Verfügung, der zur Kontaktierung integrierter Aktoren oder für sonst notwendige Verbindungen verwendet werden kann.

Es versteht sich, dass die vorangehend beschriebenen Funktionselemente beliebig kombiniert und in Verbindung mit unterschiedlichen Fluidnetzwerken aus Mikrokanälen, Verbindungslöchern und Kammern verwendet werden können.

Durch die weitgehende Vermeidung von Kleb- und Schweißverbindungen kann es bei der Montage der Flusszelle nicht zu Beeinträchtigungen funktionalisierter Oberflächen kommen.

## Patentansprüche

1. Flusszelle mit einer Schichtung aus drei Platten (3-5), in der eine Zwischenplatte (4) aus einem nachgiebigen Material zwischen Platten (3,5) aus einem festeren Material eingespannt ist und mindestens eine der Platten wenigstens eine zur Aufnahme von Fluid vorgesehene Ausnehmung (15) aufweist, die durch eine andere Platte (3,5) der Schichtung begrenzt ist, wobei die Platten (3-5) durch in Richtung parallel zur Plattenebene im Abstand zu der Ausnehmung (15,17) angeordnete Mittel (12,13,18) unter Pressung der Zwischenplatte (4) miteinander verbunden sind,
**dadurch gekennzeichnet,**
**dass** wenigstens eine der Platten (3,5) aus festerem Material wenigstens eine Ausnehmung (10) zur positionsgenauen Aufnahme eines separat vorgefertigten Mikrobauteils (6,6d) aufweist, wobei das Mikrobauteil (6,6d) in der Ausnehmung (10) formschlüssig gehalten und die Ausnehmung sowohl zur Zwischenplatte (4) als auch zur Außenseite der Flusszelle hin offen und von außen gesehen hinterschnitten oder nur zur Zwischenplatte hin offen ist und dass als Ausnehmung zu Aufnahme von Fluid ein parallel zur Plattenebene verlaufender Mikrokanals (15) vorgesehene ist, der mit dem Mikrobauteil (6) oder einer durch das Mikrobauteil (6) begrenzten Reaktionskammer (17) in Fluidverbindung steht.

2. Flusszelle nach Anspruch 1,
**dadurch gekennzeichnet,**
**dass** die Schichtung seitlich im Abstand zu der Ausnehmung angeordnete Positionierelemente (12,13,18) zur gegenseitigen Ausrichtung der Platten umfasst.

3. Flusszelle nach Anspruch 2,
**dadurch gekennzeichnet,**
**dass** die Positionierelemente und Verbindungsmittel (12,13,18) gemeinsame Teile aufweisen.

4. Flusszelle nach Anspruch 2 oder 3,
**dadurch gekennzeichnet,**
**dass** die Positionierelemente oder/und die Verbindungsmittel Löcher (13,18) und Stifte (12) umfassen.

5. Flusszelle nach Anspruch 4,
**dadurch gekennzeichnet,**
**dass** die Stifte (12) einstückig mit einer (3) der Platten (3-5) verbunden sind.

6. Flusszelle nach Anspruch 4 oder 5,
**dadurch gekennzeichnet,**
**dass** der Stiftdurchmesser geringer als der Lochdurchmesser ist.

7. Flusszelle nach einem der Ansprüche 1 bis 6,
**dadurch gekennzeichnet,**
**dass** die Verbindungsmittel oder/und Positionierelemente an einander gegenüberliegenden Rändern der Platten (3-5) angeordnet sind.

8. Flusszelle nach einem der Ansprüche 1 bis 7,
**dadurch gekennzeichnet,**
**dass** wenigstens eine der Platten aus festerem Material Löcher mit einer Einsenkung (40) für die Aufnahme eines die Platte hintergreifenden Kopfes (29b) eines Verbindungsstiftes (12b) aufweist.

9. Flusszelle nach einem der Ansprüche 1 bis 8,
**dadurch gekennzeichnet,**
**dass** die lateralen Abmessungen des in der Ausnehmung (10) angeordneten Mikrobauteils (6) größer als die lateralen Abmessungen einer durch das Mikrobauteil (6) begrenzten Ausnehmung (17) in der Zwischenplatte (4) sind.

10. Flusszelle nach einem der Ansprüche 1 bis 9,
**dadurch gekennzeichnet,**
**dass** die Zwischenplatte hauptsächlich in einem an die Ausnehmung oder/und Verbindungsmittel angrenzenden Bereich (140,141) gepresst ist (Fig. 4e und 6e).

11. Flusszelle nach einem der Ansprüche 1 bis 10,
**dadurch gekennzeichnet,**
**dass** in einer der Platten eine Ausnehmung (32e,111,112) mit einem gegenüber der Plattendicke geschwächten, verformbaren oder mit einer Kanüle durchstoßbaren Bodenbereich (38,116,119) gebildet ist (Fig. 5f und Fig. 10a bis c).

12. Flusszelle nach einem der Ansprüche 1 bis 11,
**dadurch gekennzeichnet,**
**dass** an wenigstens eine der Platten (3,5) aus festerem Material ein Anschlussstück (7-9) einstückig angeformt ist.

13. Flusszelle nach einem der Ansprüche 1 bis 12,
**dadurch gekennzeichnet,**
**dass** ein Anschlussstück der Flusszelle eine konische Außen- oder/und Innenfläche (142,143) aufweist.

14. Flusszelle nach einem der Ansprüche 1 bis 13,
**dadurch gekennzeichnet,**
**dass** in die Flusszelle elektrische Leiter (126,130-135) integriert sind (Fig. 11).

15. Flusszelle nach Anspruch 14,
**dadurch gekennzeichnet,**
**dass** ein Leiter (126,131,133) in Form einer Beschichtung einer der Platten gebildet ist.

16. Flusszelle nach einem der Ansprüche 1 bis 15,
**dadurch gekennzeichnet,**
**dass** eine an der Flusszelle außen gebildete, zur Aufnahme von Fluid vorgesehene Ausnehmung (27) durch eine Folie (26) abgedeckt ist (Fig. 4d).

17. Flusszelle nach einem der Ansprüche 1 bis 16,
**dadurch gekennzeichnet,**
**dass** eine einzige Schichtung von Platten (3-5) mehrere Flusszellen-Funktionseinheiten (2) aufweist.

18. Flusszelle nach einem der Ansprüche 1 bis 17,
**dadurch gekennzeichnet,**
**dass** zwischen zwei Platten der Schichtung eine Folie (84,109) zur Bildung eines Ventils oder zur Abdeckung einer nach außen öffnenden Ausnehmung gebildet ist (Fig. 8e und Fig. 9d).

19. Flusszelle nach einem der Ansprüche 1 bis 18,
**dadurch gekennzeichnet,**
**dass** als Mikrobauteil eine Pumpe (58), ein Ventil (71), ein Speicher (89), ein Filter (57), ein Sichtfenster, ein Wärmeleiter, eine Elektrode (56) oder/und ein Detektorbauteil vorgesehen ist.

## Claims

1. Flow cell having a layer assembly comprising three plates (3-5), in which an intermediate plate (4) made of a compliant material is clamped between plates (3, 5) made of a relatively rigid material and at least one of the plates has at least one recess (15) provided for holding fluid, which recess is delimited by another plate (3, 5) of the layer assembly, wherein the plates (3-5) are interconnected by means (12, 13, 18) arranged in a direction parallel to the plate plane at a distance from the recess (15, 17) with the intermediate plate (4) being compressed,
**characterized in that**
at least one of the plates (3, 5) made of relatively rigid material has at least one recess (10) for holding with accurate positioning a separately pre-manufactured micro-component (6, 6d), wherein the micro-component (6, 6d) is held in a form-fitting manner in the recess (10) and the recess is open both towards the intermediate plate (4) and towards the exterior of the flow cell and, as viewed from the outside, is undercut, or is open only towards the intermediate plate, and **in that** a micro-channel (15) extending parallel to the plate plane is provided as a recess for holding fluid, which micro-channel is fluidically connected to the micro-component (6) or a reaction chamber (17) delimited by the micro-component (6).

2. Flow cell according to Claim 1,
**characterized in that**
the layer assembly comprises positioning elements (12, 13, 18), which are arranged laterally at a distance from the recess, for the alignment of the plates with respect to one another.

3. Flow cell according to Claim 2,
**characterized in that**
the positioning elements and connecting means (12, 13, 18) have common parts.

4. Flow cell according to Claim 2 or 3,
**characterized in that**
the positioning elements and/or the connecting means comprise holes (13, 18) and pins (12).

5. Flow cell according to Claim 4,
**characterized in that**
the pins (12) are integrally connected to one (3) of the plates (3-5).

6. Flow cell according to Claim 4 or 5,
**characterized in that**
the pin diameter is smaller than the hole diameter.

7. Flow cell according to one of Claims 1 to 6,
**characterized in that**
the connecting means and/or positioning elements are arranged at edges of the plate (3-5) which are opposite one another.

8. Flow cell according to one of Claims 1 to 7,
**characterized in that**
at least one of the plates made of relatively rigid material has holes with a countersink (40) for holding a head (29b) of a connecting pin (12b), which head engages behind the plate.

9. Flow cell according to one of Claims 1 to 8,
**characterized in that**
the lateral dimensions of the micro-component (6) arranged in the recess (10) are larger than the lateral dimensions of a recess (17), which is delimited by the micro-component (6), in the intermediate plate (4).

10. Flow cell according to one of Claims 1 to 9,
**characterized in that**
the intermediate plate is mainly compressed in a region (140, 141) adjacent to the recess and/or connecting means (Fig. 4e and 6e).

11. Flow cell according to one of Claims 1 to 10,
**characterized in that**
a recess (32e, 111, 112) with a base region (38, 116, 119) which, with respect to the plate thickness, is weakened, deformable, or pierceable with a cannula, is formed in one of the plates (Fig. 5f and Fig. 10a to 10c).

12. Flow cell according to one of Claims 1 to 11,
**characterized in that**
an attachment piece (7-9) is integrally formed on at least one of the plates (3, 5) made of relatively rigid material.

13. Flow cell according to one of Claims 1 to 12,
**characterized in that**
an attachment piece of the flow cell has a conical outer and/or inner surface (142, 143).

14. Flow cell according to one of Claims 1 to 13,
**characterized in that**
electrical conductors (126, 130-135) are integrated into the flow cell (Fig. 11).

15. Flow cell according to Claim 14,
**characterized in that**
a conductor (126, 131, 133) is formed in the form of a coating of one of the plates.

16. Flow cell according to one of Claims 1 to 15,
**characterized in that**
a recess (27) provided for holding fluid and formed on the outside of the flow cell is covered by a film (26) (Fig. 4d).

17. Flow cell according to one of Claims 1 to 16,
**characterized in that**
a single layer assembly of plates (3-5) has several flow-cell functional units (2).

18. Flow cell according to one of Claims 1 to 17,
**characterized in that**
a film (84, 109) for forming a valve or for covering an outwardly opening recess is formed between two plates of the layer assembly (Fig. 8e and Fig. 9d).

19. Flow cell according to one of Claims 1 to 18,
**characterized in that**
a pump (58), a valve (71), a store (89), a filter (57), a viewing window, a heat conductor, an electrode (56) and/or a detector component is provided as the micro-component.

## Revendications

1. Cellule d'écoulement présentant une stratification constituée par trois plaques (3-5), dans laquelle une plaque intermédiaire (4) en un matériau souple est enserrée entre des plaques (3,5) en un matériau plus dur et au moins une des plaques présente au moins un évidement (15) destiné à recevoir un fluide, qui est délimité par une autre plaque (3,5) de la stratification, les plaques (3-5) étant reliées les unes aux autres par des moyens (12,13,18) disposés, dans une direction parallèle au plan de la plaque, à une certaine distance de l'évidement (15,17), tout en pressant la plaque intermédiaire (4), **caractérisée en ce qu'**au moins une des plaques (3,5) en matériau plus dur présente au moins un évidement (10) destiné à recevoir, en une position précise, une micropièce (6,6d) préfabriquée séparément, la micropièce (6,6d) étant maintenue par complémentarité de forme dans l'évidement (10) et l'évidement étant ouvert, tant vers la plaque intermédiaire (4) que vers la face externe de la cellule d'écoulement et, vu de l'extérieur, contre-dépouillé ou uniquement ouvert vers la plaque intermédiaire et **en ce qu'**un microcanal (15) s'étendant parallèlement au plan de la plaque est prévu en tant qu'évidement destiné à recevoir un fluide, qui est en communication fluidique avec la micropièce (6) et avec une chambre de réaction (17) délimitée par la micropièce (6).

2. Cellule d'écoulement selon la revendication 1, **caractérisée en ce que** la stratification comprend des éléments de positionnement (12,13,18) pour l'orientation mutuelle des plaques, disposés latéralement par rapport à l'évidement.

3. Cellule d'écoulement selon la revendication 2, **caractérisée en ce que** les éléments de positionnement et les moyens de liaison (12,13,18) présentent des parties communes.

4. Cellule d'écoulement selon la revendication 2 ou 3, **caractérisée en ce que** les éléments de positionnement et/ou les moyens de liaison comprennent des trous (13,18) et des broches (12).

5. Cellule d'écoulement selon la revendication 4, **caractérisée en ce que** les broches (12) sont reliées d'une seule pièce avec une (3) des plaques (3-5).

6. Cellule d'écoulement selon la revendication 4 ou 5, **caractérisée en ce que** le diamètre des broches est plus petit que le diamètre des trous.

7. Cellule d'écoulement selon l'une quelconque des revendications 1 à 6, **caractérisée en ce que** les moyens de liaison et/ou les éléments de positionnement sont disposés au niveau de bords mutuellement opposés des plaques (3-5).

8. Cellule d'écoulement selon l'une quelconque des revendications 1 à 7, **caractérisée en ce qu'**au moins une des plaques en matériau plus dur présente des trous dotés d'un retrait (40) pour recevoir une tête (29b), venant en prise derrière la plaque, d'une broche de liaison (12b).

9. Cellule d'écoulement selon l'une quelconque des revendications 1 à 8, **caractérisée en ce que** les dimensions latérales de la micropièce (6) disposée dans l'évidement (10) sont plus grandes que les dimensions latérales d'un évidement (17) dans la plaque intermédiaire (4), délimité par la micropièce (6).

10. Cellule d'écoulement selon l'une quelconque des revendications 1 à 9, **caractérisée en ce que** la plaque intermédiaire est principalement pressée dans une zone (140,141) adjacente à l'évidement et/ou aux moyens de liaison (Figures 4e et 6e).

11. Cellule d'écoulement selon l'une quelconque des revendications 1 à 10, **caractérisée en ce qu'**un évidement (32e,111,112) présentant une zone de fond (38,116,119) affaiblie par rapport à l'épaisseur de la plaque, déformable ou perforable par une canule est formée dans une des plaques (Figure 5f et Figures 10a à c).

12. Cellule d'écoulement selon l'une quelconque des revendications 1 à 11, **caractérisée en ce qu'**au moins une pièce de raccord (7-9) est formée, d'une seule pièce, sur au moins une des plaques (3,5) en matériau plus dur.

13. Cellule d'écoulement selon l'une quelconque des revendications 1 à 12, **caractérisée en ce que** la pièce de raccord de la cellule d'écoulement présente une surface externe et/ou interne conique (142,143).

14. Cellule d'écoulement selon l'une quelconque des revendications 1 à 13, **caractérisée en ce que** des conducteurs électriques (126,130-135) sont intégrés dans la cellule d'écoulement (Figure 11).

15. Cellule d'écoulement selon la revendication 14, **caractérisée en ce qu'**un conducteur (126,131,133) est formé sous forme d'un revêtement d'une des plaques.

16. Cellule d'écoulement selon l'une quelconque des revendications 1 à 15, **caractérisée en ce qu'**un évidement (27) formé à l'extérieur de la cellule d'écoulement, destiné à recevoir un fluide, est recouvert par une feuille (26) (Figure 4d).

17. Cellule d'écoulement selon l'une quelconque des revendications 1 à 16, **caractérisée en ce qu'**une seule stratification de plaques (3-5) présente plusieurs unités fonctionnelles (2) de cellules d'écoulement.

18. Cellule d'écoulement selon l'une quelconque des revendications 1 à 17, **caractérisée en ce qu'**une feuille (84,109) destinée à former une soupape ou à recouvrir un évidement ouvert vers l'extérieur est formée entre deux plaques de la stratification (Figure 8e et Figure 9d).

19. Cellule d'écoulement selon l'une quelconque des revendications 1 à 18, **caractérisée en ce qu'**une pompe (58), une soupape (71), un accumulateur (89), un filtre (57), un hublot, un conducteur thermique, une électrode (56) et/ou une pièce de détecteur est prévu(e) comme micropièce.
